(19) Europäisches Patentamt
European Patent Office
Office européen des brevets

(11) EP 3 581 602 A1

(12) **EUROPÄISCHE PATENTANMELDUNG**

(43) Veröffentlichungstag:
**18.12.2019 Patentblatt 2019/51**

(21) Anmeldenummer: **18178088.3**

(22) Anmeldetag: **15.06.2018**

(51) Int Cl.:
***C08G 18/48*** (2006.01) ***C08G 18/66*** (2006.01)
***C08G 18/76*** (2006.01) ***C08G 18/79*** (2006.01)
***C08G 18/18*** (2006.01) ***C08G 18/30*** (2006.01)
***C08G 18/32*** (2006.01) ***C08G 18/44*** (2006.01)
***C08J 9/00*** (2006.01) ***C08J 9/08*** (2006.01)
***C08G 18/10*** (2006.01) *C08G 101/00* (2006.01)

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Covestro Deutschland AG**
**51373 Leverkusen (DE)**

(72) Erfinder: **Die Erfindernennung liegt noch nicht vor**

(74) Vertreter: **Levpat**
**c/o Covestro AG**
**Gebäude 4825**
**51365 Leverkusen (DE)**

(54) **THIOCARBONAT-HALTIGE PREPOLYMERE UND DARAUS ERHALTENE POLYURETHANE**

(57) Die vorliegende Erfindung betrifft NCO-terminierte Prepolymere erhältlich durch oder erhalten durch Umsetzung einer Zusammensetzung enthaltend oder bestehend aus
5 bis 25 Gew.-Teilen einer Polyolkomponente, und
75 bis 95 Gew.-Teilen einer Polyisocyanatkomponente, jeweils bezogen auf die Zusammensetzung,
bei einem Index von 200 bis 25000,
wobei die Polyolkomponente ein Polyetherthiocarbonat-Polyol enthält oder daraus besteht.

Des Weiteren betrifft die Erfindung die Verwendung des NCO-terminierten Prepolymers zur Herstellung eines Polyurethanpolymers, ein Verfahren zur Herstellung eine Polyurethanpolymers insbesondere eines Polyurethan-Weichschaums, durch Umsetzung einer Zusammensetzung enthaltend das NCO-terminierte Prepolymer, sowie die Verwendung des erhaltenen Polyurethanpolymers zur Herstellung von Möbelpolsterungen, Textileinlagen, Matratzen, Automobilsitzen, Kopfstützen, Armlehnen, Schwämmen und Bauelementen, oder Sitz- und Armaturenverkleidungen für Fahrzeuge.

EP 3 581 602 A1

## Beschreibung

Die vorliegende Erfindung betrifft NCO-terminierte Prepolymere die durch Umsetzung einer Polyolkomponente mit einer Isocyanatkomponente erhältlich sind und die Verwendung dieser Prepolymere bei der Herstellung von Polyurethanen. Des Weiteren betrifft die Erfindung Verfahren zur Herstellung von Polyurethanen, bevorzugt Polyurethan-Weichschaumstoffen (im Folgenden auch als "PUR-Weichschaumstoffe" bezeichnet) aus Zusammensetzungen enthaltend die Prepolymere sowie die Verwendung der erhaltenen Polyurethane.

Die Herstellung von Polyurethanen, durch Umsetzung einer Reaktionsmischung von Polyisocyanaten mit Polyolen, Katalysatoren, und gegebenenfalls mit Treibmitteln, wie Wasser, Zusatzstoffen, und/oder Hilfsmitteln ist allgemein bekannt. Polyurethane können unter anderem als Hartschäume oder als Weichschäume hergestellt werden. Unter Polyurethan-Weichschaumstoffen werden Polyurethan-Schäume verstanden, die einer Druck-beanspruchung einen geringen Widerstand entgegensetzen, die offenzellig, luftdurchlässig und reversibel verformbar sind. Polyurethan-Weichschaumstoffe können unter anderem hergestellt werden, indem die Reaktionsmischung in einer Form polymerisiert wird, man spricht dann von Formschäumen. Als Polyisocyanate kommen in erster Linie Diisocyanato-toluol (TDI) und/oder Diisocyanatodiphenylmethan (MDI) zum Einsatz, sowie Polyisocyanat-Prepolymere. Polyisocyanat-Prepolymere können durch Umsetzung eines Polyisocyanats mit einem Polyether oder Polyester sowie Alkoholen oder Aminen hergestellt werden. Als Polyole werden in erster Linie Polyether, Polyester und/oder Polyethercarbonatpolyole verwendet, die Hydroxyl-Endgruppen aufweisen.

Die Herstellung von Polyethercarbonatpolyolen durch katalytische Umsetzung von Alkylenoxiden (Epoxiden) und Kohlendioxid in Anwesenheit von H-funktionellen Starterverbindungen ("Starter") wird seit mehr als 40 Jahren intensiv untersucht (z. B. Inoue et al, Copolymerization of Carbon Dioxide and Epoxide with Organometallic Compounds; Die Makromolekulare Chemie 130, 210-220, 1969). Diese Reaktion ist in Schema (I) schematisch dargestellt, wobei X für O steht und e und f für eine ganzzahlige Zahl stehen, und wobei das hier im Schema (I) gezeigte Produkt für das Polyethercarbonatpolyol lediglich so verstanden werden soll, dass sich Blöcke mit der gezeigten Struktur im erhaltenen Polyethercarbonatpolyol prinzipiell wiederfinden können, die Reihenfolge, Anzahl und Länge der Blöcke sowie die OH-Funktionalität des Starters aber variieren kann und nicht auf das in Schema (I) gezeigte Polyethercarbonatpolyol beschränkt ist. Als weiteres Produkt, eigentlich Nebenprodukt, entsteht das in Schema (I) gezeigte cyclische Carbonat (beispielsweise für X = O, R = $CH_3$ Propylencarbonat). Bei der in Schema (I) gezeigten Reaktion kann ein Teil oder alle der im Polyethercarbonatpolyol enthaltenen Carbonatgruppen durch Thiocarbonatgruppen ersetzt werden (Schema (I), X = S).

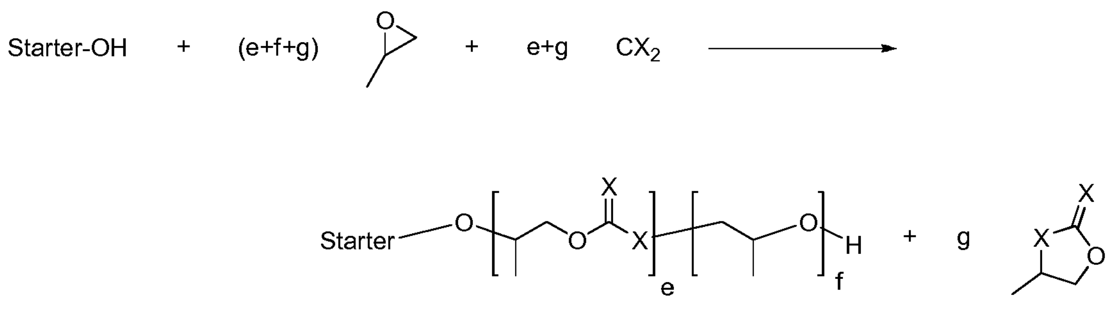

(I)

Die Synthese von Polyethercarbonatpolyolen aus $CO_2$ ist ökologisch vorteilhaft, weil ein Treibhausgas verwendet wird. Allerdings führt die Verwendung eines Gases in einer Synthese auch zu einem aufwendigen, kostenintensiven Syntheseverfahren, z.B. weil nur eine Apparatur für die Synthese verwendet werden kann, die bestimmte Drücke aushält.

Polyurethane finden vielfältige Verwendungen, z.B. als Weichschaumstoffe für Polstermaterial, als halbharte Integralschaumstoffe für Automobilteile, als harte Dämmschaumstoffe, als Elastomerwerkstoffe für Dichtstoffe und -massen, sowie als Lacke oder Beschichtungen, Fasern und Klebstoffe. Unter Polyurethan-Weichschaumstoffen werden Polyurethan-Schaumstoffe verstanden, die einer Druckbeanspruchung einen geringen Widerstand entgegensetzen, die offenzellig, luftdurchlässig und reversibel verformbar sind (G.W. Becker, D. Braun: Polyurethane. In: G. Oertel (Ed.), Kunststoff Handbuch, München, Carl Hanser Verlag, 1993, 3. A., Kap. 5, S. 193 f.).

So wie alle organischen Polymere sind auch Polyurethane brennbar. Bei den meisten der o.g. Anwendungen besteht jedoch ein Bedarf an Polyurethanpolymeren, die nur eine geringere Wärmeentwicklung beim Verbrennen aufweisen. Daher werden Polyurethanpolymere häufig mit Flammschutzmitteln oder flammschützenden Additiven versehen, wie beispielsweise halogenhaltigen Verbindungen sowie Stickstoff- und Phosphorverbindungen. Dies gilt insbesondere für Polyurethan-Weichschaumstoffe bei denen der Verbrennungsprozess aufgrund ihrer vergleichsweise großen Oberfläche pro Masseneinheit sogar noch verstärkt wird. Zudem finden Polyurethan-Weichschaumstoffe häufig Verwendung in Bereichen, in denen Materialien die flammschützende Eigenschaften aufweisen oder nicht gut brennen, nicht nur wünschenswert sind und sondern teilweise auch vorgeschrieben sind, z.B. im Fahrzeugbau. Es besteht daher ein Bedarf an Polyurethanpolymeren, insbesondere an Polyurethan-Weichschaumstoffen, die beim Verbrennen eine vergleichsweise geringe Wärmentwicklung aufweisen.

Darüber hinaus besteht ein Bedarf für einen Herstellungsprozess für Polyurethanpolymere, insbesondere für Polyurethan-Weichschaumstoffe, der einfach und vergleichsweise kostengünstig ist. Daher gibt es verschiedene Ansätze das Syntheseverfahren zu verbessern beispielsweise indem kostengünstigere Edukte für die Synthese zur Verfügung gestellt werden oder Edukte, deren Verwendung weniger aufwändige Apparaturen erfordert. Die so erhaltenen Polyurethanpolymere sollen aber zumindest vergleichbare mechanische Eigenschaften wie z.B. Rohdichte und Druckfestigkeit, und zumindest vergleichbare Eigenschaften beim Verbrennen aufweisen, wie mit herkömmlichen Edukten oder Verfahren dargestellte Polyurethane.

US 2016/257776 bezieht sich auf Herstellungsverfahren für Polyurethan-Schäume, bei denen Polyethercarbonat-Polyole ohne oder mit weniger als 5 Gew.-% terminalen Ethylenoxid-Einheiten verwendet werden. Die US 2016/257776 offenbart Polyurethan-Schäume, deren Isocyanatkomponente ein NCO-terminiertes Polymer enthalten, das aus einem Polyethercarbonat-Polyol und einer Mischung aus difunktionellen Isocyanten mit einem Polyphenyl-Polymethylene-Polyisocyanat ("Polynukleares MDI) hergestellt wird. Die Druckschrift offenbart keine flammschützenden Eigenschaften der erhaltenen Polyurethan-Schäume.

Aufgabe der vorliegenden Erfindung ist es, ein einfaches und vergleichsweise kostengünstiges Verfahren für die Herstellung von Polyurethanpolymeren, insbesondere von Polyurethan-Weichschaumstoffen, zur Verfügung zu stellen. Dabei sollen insbesondere die Nachteile reduziert werden, die durch die Verwendung eines gasförmigen Einsatzstoffes für die Polyether-Polyolsynthese auftreten. Das zur Herstellung von Polyetherpolyolen eingesetzte Propylenoxid soll durch weniger flüchtige und preiswertere Rohstoffe ersetzt werden ohne, dass dabei die für die Verarbeitung relevante Viskosität von < 3,00 Pa*s (25°C) für das Polyol bzw. <0,35 Pa*s (25°C) für das eingesetzte Isocyanatpräpolymer um mehr als 20% ansteigt, wie es beim Einsatz von Polyesterpolyolen oder Polyetherpolycarbonatpolyolen der Fall wäre. Darüber hinaus ist es Aufgabe der vorliegenden Erfindung mit diesem Verfahren Polyurethanpolymere, insbesondere für Polyurethan-Weichschaumstoffe, zur Verfügung zu stellen, die die gleichen oder zumindest vergleichbare mechanische Eigenschaften aufweisen wie mit herkömmlichen Edukten oder Verfahren dargestellte Polyurethane. Des Weiteren sollen die so erhaltenen Polyurethanpolymere, insbesondere Polyurethan-Weichschaumstoffe, nur eine geringere Wärmeentwicklung beim Verbrennen aufweisen. Insbesondere sollen die geringe Wärmeentwicklung beim Verbrennen ohne Flammschutzmittel oder nur mit einem geringeren Zusatz von Flammschutzmitteln oder anderen flammschützenden Additiven erreicht werden.

Diese Aufgabe wurde gelöst durch ein NCO-terminiertes Prepolymer erhältlich durch oder erhalten durch Umsetzung einer Zusammensetzung enthaltend oder bestehend aus

5 bis 25 Gew.-Teilen, bevorzugt 10 bis 15 Gew.-Teile, bevorzugter 11 bis 13 Gew.-Teile, einer Polyolkomponente, und

75 bis 95 Gew.-Teilen, bevorzugt 85 bis 90 Gew.-Teile, bevorzugter 87 bis 89 Gew.-Teile einer Polyisocyanatkomponente, jeweils bezogen auf die Zusammensetzung,

bei einem Index von 200 bis 25000, bevorzugt 1000-8000, bevorzugter 4500 bis 5500, dadurch gekennzeichnet, dass die Polyolkomponente ein Polyetherthiocarbonat-Polyol enthält oder daraus besteht.

Es wurde überraschend gefunden, dass ein NCO-terminiertes Prepolymer auf Basis von Polyetherthiocarbonat-Polyol für die Synthese von Polyurethanpolymer geeignet ist, vergleichbare Eigenschaften zu einem Polyether-Polyol-basierten Prepolymer und eine günstigere Viskosität im Bereich von 0,10 bis 0,35 Pa*s (25°C) als ein vergleichbar hergestelltes Polyethercarbonat-Polyolbasiertes Prepolymer aufweist und dass ein damit dargestelltes Polyurethanpolymer, insbesondere Polyurethan-Weichschaumstoff, vergleichbare mechanische Eigenschaften aufweist wie ein mit herkömmlichen Edukten oder Verfahren dargestelltes Polyurethanpolymer. Darüber hinaus wurde gefunden, dass ein mit dem erfindungsgemäßen NCO-terminiertem Prepolymer dargestelltes Polyurethanpolymer, insbesondere ein Polyurethan-Weichschaumstoff, eine teilweise geringere Wärmeentwicklung beim Verbrennen aufweist, wobei dieser Effekt insbesondere ohne Zusatz von Flammschutzmitteln oder anderen flammschützenden Additiven erreicht wird.

Die Polyetherthiocarbonat-Polyole haben vorzugsweise eine OH-Funktionalität (d.h. durchschnittlich Anzahl von OH-Gruppen pro Molekül), welche von der von mindestens 0,8, bevorzugt von 1 bis 8, besonders bevorzugt von 1 bis 6 und ganz besonders bevorzugt von 1,7 bis 3,3.

Bevorzugt ist das Polyetherthiocarbonat-Polyol erhältlich durch oder erhalten durch Umsetzung einer Mischung enthaltend oder bestehend aus einer H-funktionellen Starterverbindung, mindestens einem Alkylenoxid und $CS_2$, wobei der Anteil an $CS_2$ in dieser Mischung 5 bis 15 Gew.-%, bevorzugt 7 bis 12 Gew.-%, besonders bevorzugt 8 bis 10 Gew.-%, beträgt.

Bevorzugt ist das Polyetherhiocarbonat-Polyol erhältlich durch oder erhalten durch ein Verfahren, umfassend den Schritt der Reaktion von Kohlenstoffdisulfid und mindestens eines Alkylenoxids, in Gegenwart eines Doppelmetallcyanid-Katalysators und mindestens einer H-funktionellen Starterverbindung, wobei der Doppelmetallcyanid-Katalysator bevorzugt vor dem ersten Kontakt mit Kohlenstoffdisulfid zuvor mit mindestens einem Alkylenoxid kontaktiert wurde. Dadurch, dass der DMC-Katalysator vor dem ersten Kontakt mit $CS_2$ zuvor mit mindestens einem Alkylenoxid kontaktiert wurde, findet eine Aktivierung des Katalysators statt. Während der Aktivierung kann durch eine exotherme chemische Reaktion eine Wärmeentwicklung auftreten, die zu Temperaturspitzen ("Hotspots") führen kann. Im Allgemeinen kann dem Aktivierungsschritt ein Schritt zum Trocknen des DMC-Katalysators und gegebenenfalls der H-funktionellen Starterverbindung bei erhöhter Temperatur und/oder reduziertem Druck, gegebenenfalls unter Durchleiten eines Inertgases durch die Reaktionsmischung, vorgelagert sein.

Allgemein können für die Synthese des Polyetherthiocarbonat-Polyols Alkylenoxide (Epoxide) mit 2-45 Kohlenstoffatomen eingesetzt werden. Bevorzugt wird das Alkylenoxid ausgewählt aus mindestens einer Verbindung der Gruppe bestehend aus Ethylenoxid, Propylenoxid, 1-Butenoxid, 2,3-Butenoxid, 2-Methyl-1,2-propenoxid (Isobutenoxid), 1-Pentenoxid, 2,3-Pentenoxid, 2-Methyl-1,2-butenoxid, 3-Methyl-1,2-butenoxid, Epoxide von C6-C22 $\alpha$-Olefinen, wie 1-Hexenoxid, 2,3-Hexenoxid, 3,4-Hexenoxid, 2-Methyl-1,2-pentenoxid, 4-Methyl-1,2-pentenoxid, 2-Ethyl-1,2-butenoxid, 1-Heptenoxid, 1-Octenoxid, 1-Nonenoxid, 1-Decenoxid, 1-Undecenoxid, 1-Dodecenoxid, 4-Methyl-1,2-pentenoxid, Cyclopentenoxid, Cyclohexenoxid, Cycloheptenoxid, Cyclooctenoxid, Styroloxid, Methylstyroloxid, Pinenoxid, Allylglycedylether, Vinylcyclohexenoxid, Cyclooctadienmonoepoxid, Cyclododecatrienmono-epoxid, Butadienmonoepoxid, Isoprenmonoepoxid, Limonenoxid, 1,4-Divinylbenzolmonoepoxid, 1,3-Divinylbenzolmonoepoxid, Glycidylacrylat und Glycidylmethacrylat ein- oder mehrfach epoxidierte Fette als Mono-, Di- und Triglyceride, epoxidierte Fettsäuren, C1-C24-Ester epoxidierter Fettsäuren, Epichlorhydrin, Glycidol, und Derivate des Glycidols wie beispielsweise Glycidylether von C1-C22 Alkanolen, Glycidylester von C1-C22 Alkancarbonsäuren. Beispiele für Derivate des Glycidols sind Phenylglycidylether, Kresylglycidylether, Methylglycidylether, Ethylglycidylether und 2-Ethylhexylglycidylether sowie epoxidfunktionelle Alkyoxysilane wie beispielsweise 3-Glycidyloxypropyltrimethoxysilan, 3-Glycidyloxypropyltriethoxysilan, 3 -Glycidyloxypropyltri-propoxysilan, 3 -Glycidyloxypropyl-methyldimethoxysilan, 3-Glycidyloxypropyl-ethyldiethoxysilan und 3-Glycidyloxypropyltrlisopropoxysilan. Bevorzugt ist Propylenoxid als Alkylenoxid bei der Herstellung des Polyetherthiocarbonat-Polyols.

Als geeignete H-funktionelle Starterverbindungen die Synthese des Polyetherthiocarbonat-Polyols, auch als Starter bezeichnet, können Verbindungen mit für die Alkoxylierung aktiven H-Atomen eingesetzt werden. Für die Alkoxylierung aktive Gruppen mit aktiven H-Atomen sind beispielsweise - OH, -NH2 (primäre Amine), -NH- (sekundäre Amine), -SH und -CO2H, bevorzugt sind -OH und - NH2, besonders bevorzugt ist -OH. Als H-funktionelle Starterverbindung können beispielsweise mindestens eine Verbindung ausgewählt werden aus der Gruppe bestehend aus ein- oder mehrwertige Alkohole, mehrwertige Amine, mehrwertige Thiole, Aminoalkohole, Thioalkohole, Hydroxyester, Polyetherpolyole, Polyesterpolyole, Polyesteretherpolyole, Polyethercarbonatpolyole, Polycarbonatpolyole, Polycarbonate, polymere Formaldehydverbindungen, Polyethylenimine, Polyetheramine (z.B. sogenannte Jeffamine® von Huntsman, wie z.B. D-230, D-400, D-2000, T-403, T-3000, T-5000 oder entsprechende Produkte der BASF, wie z.B. Polyetheramin D230, D400, D200, T403, T5000), Polytetrahydrofurane (z.B. PolyTHF® der BASF, wie z.B. PolyTHF® 250, 650S, 1000, 1000S, 1400, 1800, 2000), Polytetrahydrofuranamine (BASF Produkt Polytetrahydrofuranamin 1700), Polyetherthiole, Polyacrylatpolyole, Ricinusöl, das Mono- oder Diglycerid von Ricinolsäure, Monoglyceride von Fettsäuren, chemisch modifizierte Mono-, Di- und/oder Triglyceride von Fettsäuren, und C1-C24 Alkyl-Fettsäureester, die im Mittel mindestens 2 OH-Gruppen pro Molekül enthalten. Beispielhaft handelt es sich bei den C1-C23 Alkyl-Fettsäureester, die im Mittel mindestens 2 OH-Gruppen pro Molekül enthalten, um Handelsprodukte wie Lupranol Balance® (Fa. BASF AG), Merginol®-Typen (Fa. Hobum Oleochemicals GmbH), Sovermol®-Typen (Fa. Cognis Deutschland GmbH & Co. KG) und Soyol® TM-Typen (Fa. USSC Co.).

Als monofunktionelle Starterverbindungen können Alkohole, Amine, Thiole und Carbonsäuren eingesetzt werden. Als monofunktionelle Alkohole können Verwendung finden: Methanol, Ethanol, 1-Propanol, 2-Propanol, 1-Butanol, 2-Butanol, tert-Butanol, 3-Buten-1-ol, 3-Butin-1-ol, 2-Methyl-3-buten-2-ol, 2-Methyl-3-butin-2-ol, Propargylalkohol, 2-Methyl-2-propanol, 1-tert-Butoxy-2-propanol, 1-Pentanol, 2-Pentanol, 3-Pentanol, 1-Hexanol, 2-Hexanol, 3-Hexanol, 1-Heptanol, 2-Heptanol, 3-Heptanol, 1-Octanol, 2-Octanol, 3-Octanol, 4-Octanol, Phenol, 2-Hydroxybiphenyl, 3-Hydroxybiphenyl, 4-Hydroxybiphenyl, 2-Hydroxypyridin, 3-Hydroxypyridin, 4-Hydroxypyridin. Als monofunktionelle Amine kommen in Frage: Butylamin, tert-Butylamin, Pentylamin, Hexylamin, Anilin, Aziridin, Pyrrolidin, Piperidin, Morpholin. Als monofunktionelle Thiole können verwendet werden: Ethanthiol, 1-Propanthiol, 2-Propanthiol, 1-Butanthiol, 3-Methyl-1-butanthiol, 2-Buten-l-thiol, Thiophenol. Als monofunktionelle Carbonsäuren seien genannt: Ameisensäure, Essigsäure, Propionsäure, Buttersäure, Fettsäuren wie Stearinsäure, Palmitinsäure, Ölsäure, Linolsäure, Linolensäure, Benzoesäure, Acrylsäure.

Als H-funktionelle Starterverbindung geeignete mehrwertige Alkohole sind beispielsweise zweiwertige Alkohole (wie beispielsweise Ethylenglykol, Diethylenglykol, Propylenglykol, Dipropylenglykol, 1,3-Propandiol, 1,4-Butandiol, 1,4-Butendiol, 1,4-Butindiol, Neopentylglykol, 1,5-Pentantandiol, Methylpentandiole (wie beispielsweise 3-Methyl-1,5-pentandiol), 1,6-Hexandiol; 1,8-Octandiol, 1,10-Decandiol, 1,12-Dodecandiol, Bis-(hydroxymethyl)-cyclohexane (wie beispielweise 1,4-Bis-(hydroxymethyl)cyclohexan), Triethylenglykol, Tetraethylenglykol, Polyethylenglykole, Dipropylenglykol, Tripropylenglykol, Polypropylenglykole, Dibutylenglykol und Polybutylenglykole); dreiwertige Alkohole (wie beispielweise Trimethylolpropan, Glycerin, Trishydroxyethylisocyanurat, Rizinusöl); vierwertige Alkohole (wie beispielsweise Pentaerythrit); Polyalkohole (wie beispielweise Sorbit, Hexit, Saccharose, Stärke, Stärkehydrolysate, Cellulose, Cellulosehydrolysate, hydroxyfunktionalisierte Fette und Öle, insbesondere Rizinusöl), sowie alle Modifizierungsprodukte dieser zuvor genannten Alkohole mit unterschiedlichen Mengen an ε-Caprolacton.

Die H-funktionellen Starterverbindungen können auch aus der Substanzklasse der Polyetherpolyole ausgewählt sein, insbesondere solchen mit einem Molekulargewicht Mn im Bereich von 100 bis 4000 g/mol. Bevorzugt sind Polyetherpolyole, die aus sich wiederholenden Ethylenoxid- und Propylenoxideinheiten aufgebaut sind, bevorzugt mit einem Anteil von 35 bis 100% Propylenoxideinheiten, besonders bevorzugt mit einem Anteil von 50 bis 100% Propylenoxideinheiten. Hierbei kann es sich um statistische Copolymere, Gradienten-Copolymere, alternierende oder Blockcopolymere aus Ethylenoxid und Propylenoxid handeln. Geeignete Polyetherpolyole, aufgebaut aus sich wiederholenden Propylenoxid- und/oder Ethylenoxideinheiten sind beispielsweise die Desmophen®-, Acclaim®-, Arcol®-, Baycoll®-, Bayfill®-, Bayflex®-Baygal®-, PET®- und Polyether-Polyole der Covestro AG (wie z. B. Desmophen® 3600Z, Desmophen® 1900U, Acclaim® Polyol 2200, Acclaim® Polyol 40001, Arcol® Polyol 1004, Arcol® Polyol 1010, Arcol® Polyol 1030, Arcol® Polyol 1070, Baycoll® BD 1110, Bayfill® VPPU 0789, Baygal® K55, PET® 1004, Polyether® S180). Weitere geeignete homo-Polyethylenoxide sind beispielsweise die Pluriol® E-Marken der BASF SE, geeignete homo-Polypropylenoxide sind beispielsweise die Pluriol® P-Marken der BASF SE, geeignete gemischte Copolymere aus Ethylenoxid und Propylenoxid sind beispielsweise die Pluronic® PE oder Pluriol® RPE-Marken der BASF SE.

Die H-funktionellen Starterverbindungen können auch aus der Substanzklasse der Polyesterpolyole ausgewählt sein, insbesondere solchen mit einem Molekulargewicht Mn im Bereich von 200 bis 4500 g/mol. Als Polyesterpolyole können mindestens difunktionelle Polyester eingesetzt werden. Bevorzugt bestehen Polyesterpolyole aus alternierenden Säure- und Alkoholeinheiten. Als Säurekomponenten können z.B. Bernsteinsäure, Maleinsäure, Maleinsäureanhydrid, Adipinsäure, Phthalsäureanhydrid, Phthalsäure, Isophthalsäure, Terephthalsäure, Tetrahydrophtalsäure, Tetrahydrophthalsäureanhydrid, Hexahydrophthalsäureanhydrid oder Gemische aus den genannten Säuren und/oder Anhydride eingesetzt werden. Als Alkoholkomponenten werden z.B. Ethandiol, 1,2-Propandiol, 1,3-Propandiol, 1,4-Butandiol, 1,5-Pentandiol, Neopentylglykol, 1,6-Hexandiol, 1,4-Bis-(hydroxymethyl)-cyclohexan, Diethylenglykol, Dipropylenglykol, Trimethylolpropan, Glycerin, Pentaerythrit oder Gemische aus den genannten Alkoholen verwendet. Werden als Alkoholkomponente zweiwertige oder mehrwertige Polyetherpolyole eingesetzt, so erhält man Polyesteretherpolyole die ebenfalls als Starterverbindungen zur Herstellung der Polyethercarbonatpolyole dienen können. Bevorzugt werden Polyetherpolyole mit Mn = 150 bis 2000 g/mol zur Herstellung der Polyesteretherpolyole eingesetzt.

Des Weiteren können als H-funktionelle Starterverbindungen Polycarbonatdiole eingesetzt werden, insbesondere solche mit einem Molekulargewicht Mn im Bereich von 150 bis 4500 g/mol, vorzugsweise 500 bis 2500 g/mol, die beispielsweise durch Umsetzung von Phosgen, Dimethylcarbonat, Diethylcarbonat oder Diphenylcarbonat und difunktionellen Alkoholen oder Polyesterpolyolen oder Polyetherpolyolen hergestellt werden. Beispiele zu Polycarbonaten finden sich z.B. in der EP-A 1359177. Beispielsweise können als Polycarbonatdiole die Desmophen® C-Typen der CovestroAG verwendet werden, wie z.B. Desmophen® C 1100 oder Desmophen® C 2200. Bevorzugt können Polyethercarbonatpolyole, Polycarbonatpolyole und/oder Polyetherestercarbonatpolyole als H-funktionelle Starterverbindungen eingesetzt werden. Insbesondere können Polyethercarbonatpolyole, Polycarbonatpoylole und/oder Polyetherestercarbonatpolyole durch Umsetzung von Alkylenoxiden, bevorzugt Ethylenoxid, Propylenoxid oder deren Mischungen, optional weiteren Co-Monomeren mit CO2 in Gegenwart einer weiteren H-funktionellen Starterverbindung und unter Verwendung von Katalysatoren erhalten werden. Diese Katalysatoren umfassen Doppelmetallcyanid-Katalysatoren (DMC-Katalysatoren) und/oder Metallkomplexkatalysatoren beispielsweise auf Basis der Metalle Zink und/oder Cobalt, wie beispielsweise Zink-Glutarat-Katalysatoren (beschrieben z.B. in M. H. Chisholm et al., Macromolecules 2002, 35, 6494), sogenannte Zink-Diiminat-Katalysatoren (beschrieben z.B. in S. D. Allen, J. Am. Chem. Soc. 2002, 124, 14284) und sogenannte Cobalt-Salen-Katalysatoren (beschrieben z.B. in US 7,304,172 B2, US 2012/0165549 A1) und/oder Mangan-Salen Komplexe. Eine Übersicht über die bekannten Katalysatoren für die Copolymerisation von Alkylenoxiden und CO2 gibt zum Beispiel Chemical Communications 47(2011)141-163. Durch die Verwendung unterschiedlicher Katalysatorsysteme, Reaktionsbedingungen und/oder reaktionssequenzen erfolgt hierbei die Bildung von statistischen, alternierenden, blockartigen oder gradientenartigen Polyethercarbonatpolyole, Polycarbonatpoylole und/oder Polyetherestercarbonatpolyole. Diese als H-funktionelle Starterverbindungen eingesetzten Polyethercarbonatpolyole, Polycarbonatpoylole und/oder Polyetherestercarbonatpolyole können hierzu in einem separaten Reaktionsschritt zuvor hergestellt werden.

Die H-funktionellen Starterverbindungen weisen im Allgemeinen eine OH-Funktionalität (d.h. Anzahl an für die Polymerisation aktiven H-Atomen pro Molekül) von 1 bis 8, bevorzugt von 2 bis 6 und besonders bevorzugt von 2 bis 4 auf. Die H-funktionellen Starterverbindungen werden entweder einzeln oder als Gemisch aus mindestens zwei H-funktionellen Starterverbindungen eingesetzt. Bevorzugte H-funktionelle Starterverbindungen sind Alkohole mit einer Zusammensetzung nach der allgemeinen Formel (I),

$$HO\text{-}(CH_2)X\text{-}OH \qquad (I)$$

wobei x eine Zahl von 1 bis 20, bevorzugt eine gerade Zahl von 2 bis 20 ist. Beispiele für Alkohole gemäß Formel (I) sind Ethylenglycol, 1,4-Butandiol, 1,6-Hexandiol, 1,8-Octandiol, 1,10 Decandiol und 1,12-Dodecandiol. Weitere bevorzugte H-funktionelle Starterverbindungen sind Neopentylglykol, Trimethylolpropan, Glycerin, Pentaerythrit, Umsetzungsprodukte der Alkohole gemäß Formel (VII) mit ε-Caprolacton, z.B. Umsetzungsprodukte von Trimethylolpropan mit ε-Caprolacton, Umsetzungsprodukte von Glycerin mit ε-Caprolacton, sowie Umsetzungsprodukte von Pentaerythrit mit ε-Caprolacton. Weiterhin bevorzugt werden als H-funktionelle Starterverbindungen Wasser, Diethylenglykol, Dipropylenglykol, Rizinusöl, Sorbit und Polyetherpolyole, aufgebaut aus sich wiederholenden Polyalkylenoxideinheiten, eingesetzt.

Besonders bevorzugt handelt es sich bei den H-funktionellen Starterverbindungen um mindestens eine Verbindung ausgewählt aus der Gruppe bestehend aus Ethylenglykol, Propylenglykol, 1,3-Propandiol, 1,3-Butandiol, 1,4-Butandiol, 1,5-Pentandiol, 2-Methylpropan-1,3-diol, Neopentylglykol, 1,6-Hexandiol, Diethylenglykol, Dipropylenglykol, Glycerin, Trimethylolpropan, di- und trifunktionelle Polyetherpolyole, wobei das Polyetherpolyol aus einer di- oder tri-H-funktionellen Starterverbindung und Propylenoxid bzw. einer di- oder tri-H-funktionellen Starterverbindung, Propylenoxid und Ethylenoxid aufgebaut ist. Die Polyetherpolyole haben bevorzugt eine OH-Funktionalität von 2 bis 4 und ein Molekulargewicht Mn im Bereich von 62 bis 8000 g/mol, bevorzugt ein Molekulargewicht und mehr bevorzugt von ≥ 92 g/mol bis ≤ 2000 g/mol.

Als Katalysator für die Herstellung der Polyethercarbonat-Polyole kann beispielsweise ein DMC-Katalysator (Doppel-Metall-Cyanid-Katalysator) eingesetzt. Es können zusätzlich oder alternativ auch andere Katalysatoren eingesetzt werden.. Die vorzugsweise einsetzbaren DMC-Katalysatoren enthaltenen Doppelmetallcyanid-Verbindungen sind die Reaktionsprodukte wasserlöslicher Metallsalze und wasserlöslicher Metallcyanidsalze. Doppelmetallcyanid (DMC)-Katalysatoren zur Verwendung in der Homopolymerisation von Alkylenoxiden sind im Prinzip aus dem Stand der Technik bekannt Bevorzugt enthält der Katalysator Cobalt und Zink.

Das erfindungsgemäße NCO-terminierte Prepolymer wird erhalten oder ist erhältlich durch Umsetzung einer Zusammensetzung enthaltend 5- 25 Gew.-Teile einer Polyolkomponente enthaltend oder bestehend aus einem Polyetherthiocarbonat-Polyol und 75 bis 95 Gew-Teilen einer Polyisocyantkomponente. Dabei enthält die Polyolkomponente bevorzugt 50 bis 90 Gew.-Teile, bezogen auf die Polyolkomponente, des Polyetherthiocarbonat-Polyols oder besteht daraus. Wie in Schema (I) gezeigt, entsteht bei der Synthese von Polyetherthiocarbonat-Polyols als weiteres Produkt, eigentlich Nebenprodukt, das in Schema (I) gezeigte cyclische Carbonat (beispielsweise für X = S, R = $CH_3$ Propylenthiocarbonat). Daher wird ein Polyetherthiocarbonat bevorzugt 0,01 bis 10 mol.-%, bevorzugter 0,1 bis 5,0 mol.-%, noch bevorzugter 0,1 bis 1,0 mol.-%, am bevorzugtesten 0,1 bis 0, 3 mol.-%, jeweils bezogen auf das Polyetherthiocarbonat-Polyol an cyclischem Carbonat enthalten.

Bevorzugt weist das Polyetherthiocarbonat-Polyol ein zahlengemitteltes Molekulargewicht nach Norm DIN 55672-1:2016-03 von 900 bis 15000 g/mol, bevorzugter von 500 bis 4000 g/mol auf.

Bevorzugt weist das Polyetherthiocarbonat-Polyol eine OH-Zahl nach DIN 53240 vom 01.06.2013 von 25 bis 125 mg KOH/g, insbesondere von 40 bis 70 mg KOH/g, auf.

Die Polyisocyanatkomponente ist bevorzugt ausgewählt aus der Gruppe bestehend aus 4,4'- , 2,4'- , 2,2'-Diphenylmethandiisocyanat, 2,4-, 2,6-Toluylendiisocyanat, phosgeniertem Anilin-Formaldehyd Polymer mit NCO Gruppen und einem Uretdionimin-haltigen Isocyanat, sowie Mischungen daraus. Bevorzugter ist eine Mischung aus phosgeniertem Anilin-Formaldehyd Polymer mit 30-35 Gew.-% NCO Gruppen und einem Uretdionimin-haltigen Isocyanat mit 25-35 Gew.-% NCO Gruppen hergestellt aus 4,4'-Methylendiphenyldiisocyanat und Methylphospholinoxid als Katalysator und einer Mischung aus 4,4'- und 2,4'-Diphenylmethandiisocyanat 11:3..

Bevorzugt enthält die Isocyanatkomponente einen Gehalt an difunktionellen Isocyanaten von 40 bis 100 Gew.-%, bevorzugt von 55 bis 75 Gew.-%, bezogen auf die Polyisocyanatkomponente. Bevorzugt enthält die Isocyanatkomponente > 60 Gew.-% monomeres Diisocyanat, d. h. 2,2'-MDI und/oder 2,4'-MDI und/oder 4,4'-MDI und/oder 2,4-TDI und/oder 2,6-TDI.

Besonders bevorzugt ist eine Mischung aus 20-40 Gew.-Teilen phosgeniertem Anilin-Formaldehyd Polymer mit 30-35 Gew.-% NCO Gruppen und 60-75Gew.-Teilen Uretdionimin-haltigen Isocyanat mit 25-35 Gew.-% NCO Gruppen hergestellt aus 4,4'-Methylendiphenyldiisocyanat und Methylphospholinoxid als Katalysator und 0,1-0,5 Gew.Teilen Mischung aus 4,4'- und 2,4'-Diphenylmethandiisocyanat 11:3, wobei die Angaben in Gew.-Teilen bezogen sind auf die Summe der Pololykomponente und der Polyisocyanatkomponente.

Bevorzugt weist das Prepolymer einen NCO-Gehalt nach DIN EN ISO 11909:2007 von 3-45 Gew.-%, bevorzugter von 15-35 Gew.-%, besonders bevorzugt von 24-29 Gew.-% auf.

Bevorzugt weist das Prepolymer eine Viskosität nach DIN 53019 von 0,10 bis 0,35 Pa*s, bevorzugter von 0,20 bis 0,28 Pa*s auf.

Eine bevorzugten Ausführungsform betrifft die Verwendung eines NCO-terminierten Prepolymers zur Herstellung eines Polyurethanpolymers, bevorzugt eines Polyurethan-Weichschaums, und zur Herstellung von Klebstoffen Dichtstoffen und -massen sowie Coatings.

Eine weitere bevorzugte Ausführungsform betrifft ein Verfahren zur Herstellung eines Polyurethanpolymers, insbesondere eines Polyurethan-Weichschaums, durch Umsetzung einer Zusammensetzung enthaltend oder bestehend aus einer Komponente A enthaltend oder bestehend aus

- 65 bis 100 Gew.-Teile, bezogen auf Komponente A, gegenüber Isocyanaten reaktionsfähigen Wasserstoffatomen aufweisenden Verbindungen mit einem zahlengemittelten Molekulargewicht von 4000 - 15.000 g/mol als Komponente A1, insbesondere 80 bis 100 Gew.-Teile,
- optional 1 bis 20 Gew.-Teile, bezogen auf Komponente A, gegenüber Isocyanaten reaktionsfähigen Wasserstoffatomen aufweisenden Verbindungen mit einem zahlengemittelten Molekulargewicht von 400 - 3990 g/mol als Komponente A2, insbesondere 3 bis 12 Gew.-Teile,
- optional 0,5 bis 25 Gew.-Teile, bezogen auf Komponente A, Wasser und/oder physikalische Treibmittel als Komponente A3, insbesondere 2 bis 5 Gew.-Teile,
- optional 0,1 bis 10 Gew.-Teile, bezogen auf Komponente A, Vernetzer, Hilfs- und Zusatzstoffe als Komponente A4, insbesondere 0,2 bis 4 Gew.-Teile, wobei die eingesetzten Hilfsmittel bevorzugt gegenüber Isocyanaten reaktionsfähigen Wasserstoffatome aufweisen,

wobei sich die Gew.-Teile der Komponente A zu 100 addieren,
und
einer Komponente B enthaltend oder bestehend aus

- 50-100 Gew-Teile, bezogen auf Komponente B, eines Prepolymers nach einem der Ansprüche 1 bis 9 als Komponente B1, insbesondere 80 bis 100 Gew.-Teile,
- optional bis 50 Gew.-Teile, bezogen auf Komponente B, Di- oder Polyisocyanaten als Komponente B2, insbesondere 10 bis 50 Gew.-Teile,

wobei sich die Gew.-Teile der Komponente B zu 100 addieren,
und die Umsetzung bei einem Index von 70 bis 150, bevorzugt von 85 bis 110 durchgeführt wird.

Eine weitere, andere bevorzugte Ausführungsform betrifft ein Verfahren zur Herstellung eines Polyurethanpolymers, insbesondere eines Polyurethan-Weichschaums, durch Umsetzung einer Zusammensetzung enthaltend oder bestehend aus
einer Komponente A enthaltend oder bestehend aus

- 65 bis 100 Gew.-Teile, bezogen auf Komponente A, eines Polyetherthiocarbonat-Polyols als Komponente A1, insbesondere 80 bis 100 Gew.-Teile,
- optional 1 bis 20 Gew.-Teile, bezogen auf Komponente A, gegenüber Isocyanaten reaktionsfähigen Wasserstoffatomen aufweisenden Verbindungen mit einem zahlengemittelten Molekulargewicht von 400 - 3990 g/mol als Komponente A2, insbesondere 3 bis 15 Gew.-Teile,
- optional 0,5 bis 25 Gew.-Teile, bezogen auf Komponente A, Wasser und/oder physikalische Treibmittel als Komponente A3, insbesondere 2 bis 5 Gew.-Teile,
- optional bis 10 Gew.-Teile, bezogen auf Komponente A, Vernetzer, Hilfs- und Zusatzstoffe als Komponente A4, insbesondere 0,2 bis 4 Gew.-Teile, wobei die eingesetzten Hilfsmittel bevorzugt gegenüber Isocyanaten reaktionsfähigen Wasserstoffatome aufweisen

und wobei sich die Gew.-Teile der Komponente A zu 100 addieren, und
Di- oder Polyisocyanate als Komponente B, wobei die Di- oder Polyisocyanat bevorzugt ist ausgewählt sind aus der Gruppe bestehend aus 4,4'- , 2,4'- , 2,2'-Diphenylmethandiisocyanat, 2,4-, 2,6-Toluylendiisocyanat, phosgeniertem Anilin-Formaldehyd Polymer mit NCO Gruppen und einem Uretdionimin-haltigen Isocyanat, sowie Mischungen daraus, wobei die Umsetzung bei einem Index von 70 bis 150, bevorzugt von 85 bis 110 durchgeführt wird.

Bevorzugt handelt es sich bei den oben genannten Verfahren um Formschaumverfahren.

Für Polyurethananwendungen werden vorzugsweise Polyetherthiocarbonatpolyole eingesetzt, die auf einer H-funktionellen Starterverbindung basieren, welche eine Funktionalität von mindestens 2 besitzt.

Als Polyisocyanatkomponente B oder B2 werden aliphatische, cycloaliphatische, araliphatische, aromatische und heterocyclische Polyisocyanate eingesetzt, wie sie z.B. von W. Siefken in Justus Liebigs Annalen der Chemie, 562, Seiten 75 bis 136, beschrieben werden, beispielsweise solche der Formel (II)

Q(NCO)n (II)

in der n = 2 - 4, vorzugsweise 2 -3,und Q einen aliphatischen Kohlenwasserstoffrest mit 2 - 18, vorzugsweise 6 - 10 C-Atomen, einen cycloaliphatischen Kohlenwasserstoffrest mit 4-15, vorzugsweise 6 - 13 C-Atomen oder einen araliphatischen Kohlenwasserstoffrest mit 8-15, vorzugsweise 8 - 13 C-Atomen bedeuten.

Geeignete Polyisocyanatkomponenten B oder B2 sind die dem Fachmann an sich bekannten aromatischen, araliphatischen, aliphatischen oder cycloaliphatischen Polyisocyanate, welche auch Iminooxadiazindion , Isocyanurat , Uretdion-, Urethan , Allophanat, Biuret, Harnstoff-, Oxadiazintrion, Oxazolidinon-, Acylharnstoff-, Carbamat- und/oder Carbodiimid-Strukturen aufweisen können. Diese können in B einzeln oder in beliebigen Mischungen untereinander eingesetzt werden.

Die vorstehend genannten Polyisocyanatkomponenten B oder B2 basieren dabei auf dem Fachmann an sich bekannten Diisocyanaten oder Triisocyanaten oder höher funktionellen Isocyanaten mit aliphatisch, cycloaliphatisch, araliphatisch und/oder aromatisch gebundenen Isocyanatgruppen, wobei es unerheblich ist, ob diese unter Verwendung von Phosgen oder nach phosgenfreien Verfahren hergestellt wurden. Beispiele für solche Diisocyanate oder Triisocyanate oder höher funktionellen Isocyanaten sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diiso-cyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Covestro AG, Leverkusen, DE), 4-Isocyanatomethyl-1,8-octandiisocyanat (Triisocyanatononan, TIN), ω,ω"-'-Diisocyanato-1,3-dimethylcyclohexan (H6XDI), 1-Isocyanato-1-methyl-3-isocyanatomethylcyclohexan, 1-Isocyanato-1-methyl-4-isocyanato-methylcyclohexan, Bis-(isocyanatomethyl)-norbornan, 1,5-Naphthalen-diisocyanat, 1,3- und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanato-methyl)benzol (XDI) sowie beliebige Mischungen genannter Verbindungen, sowie durch Dimerisierung oder Trimerisierung oder höhere Oligomerisierung der genannten Isocyanate erhaltene polyfunktionelle Isocyanate, enthaltend Isocyanurat-Ringen, Iminooxadiazindion-Ringe, Uretdion-Ringe, Urethoniminringe, sowie durch Addukt-Bildung der genannten Isocyanate an Mischungen verschiedener mehr als difunktioneller Alkohole, wie TMP, TME oder Pentaerythrit, gewonnene polyfunktionelle Isocyanate.

Die Komponente A2 sind Verbindungen mit bevorzugt mindestens zwei gegenüber Isocyanten reaktionsfähigen Wasserstoffatomen von einem Molekulargewicht in der Regel von 400 - 3990 g/mol. Hierunter versteht man neben Aminogruppen, Thiogruppen oder Carboxylgruppen aufweisende Verbindungen, vorzugsweise Hydroxylgruppen aufweisende Verbindungen, insbesondere 2 bis 8 Hydroxylgruppen aufweisende Verbindungen speziell solche vom Molekulargewicht 1000 g/mol bis 3990 g/mol, vorzugsweise 2000 g/mol bis 3990 g/mol, z.B. mindestens 2, in der Regel 2 bis 8, vorzugsweise aber 2 bis 6, Hydroxylgruppen aufweisende Polyether und Polyester sowie Polycarbonate und Polyesteramide, wie sie für die Herstellung von homogenen und von zellförmigen Polyurethanen an sich bekannt sind. Die mindestens zwei Hydroxylgruppen aufweisenden Polyether sind erfindungsgemäß bevorzugt.

In einer Ausführungsform können bevorzugt als weitere optionale Polyole Verbindungen mit mindestens zwei gegenüber Isocyanaten reaktionsfähigen Wasserstoffatomen und einem Molekulargewicht von 32 bis 399 eingesetzt. Hierunter sind Hydroxylgruppen und/oder Aminogruppen und/oder Thiolgruppen und/oder Carboxylgruppen aufweisende Verbindungen zu verstehen, vorzugsweise Hydroxylgruppen und/oder Aminogruppen aufweisende Verbindungen, die als Kettenverlängerungsmittel oder Vernetzungsmittel dienen. Diese Verbindungen weisen in der Regel 2 bis 8, vorzugsweise 2 bis 4, gegenüber Isocyanaten reaktionsfähige Wasserstoffatome auf. Beispielsweise können Ethanolamin, Diethanolamin, Triethanolamin, Sorbit und/oder Glycerin eingesetzt werden..

Als Komponente A3werden Wasser und/oder physikalische Treibmittel eingesetzt. Als physikalische Treibmittel werden beispielsweise Kohlendioxid und/oder leicht flüchtige organische Substanzen als Treibmittel eingesetzt.

Als Komponente A4 werden gegebenenfalls Hilfs- und Zusatzstoffe verwendet wie

a) Katalysatoren (Aktivatoren),

b) oberflächenaktive Zusatzstoffe (Tenside), wie Emulgatoren und Schaumstabilisatoren insbesodere solche mit niedriger Emission wie beispielsweise Produkte der Tegostab® LF-Serie,

c) Additive wie Reaktionsverzögerer (z.B. sauer reagierende Stoffe wie Salzsäure oder organische Säurehalogenide), Zellregler (wie beispielsweise Paraffine oder Fettalkohole oder Dimethylpolysiloxane), Pigmente, Farbstoffe, Flammschutzmittel, (wie beispielsweise Trikresylphosphat), Stabilisatoren gegen Alterungs- und Witterungseinflüsse, Weichmacher, fungistatisch und bakteriostatisch wirkende Substanzen, Füllstoffe (wie beispielsweise Bariumsulfat, Kieselgur, Ruß- oder Schlämmkreide) und Trennmittel.

Diese gegebenenfalls mitzuverwendenden Hilfs- und Zusatzstoffe werden beispielsweise im Kunststoff-Handbuch, Band VII, herausgegeben von G. Oertel, Carl-Hanser-Verlag, München, 3. Auflage, 1993, z.B. auf den Seiten

104-127 beschrieben.

Als Katalysatoren werden bevorzugt aliphatische tertiäre Amine (beispielsweise Trimethylamin, Tetramethylbutandiamin), cycloaliphatische tertiäre Amine (beispielsweise 1,4-Diaza(2,2,2)bicyclooctan), aliphatische Aminoether (beispielsweise Dimethylaminoethylether und N,N,N-Trimethyl-N-hydroxyethyl-bisaminoethylether), cycloaliphatische Aminoether (beispielsweise N-Ethylmorpholin), aliphatische Amidine, cycloaliphatische Amidine, Harnstoff, Derivate des Harnstoffs (wie beispielsweise Aminoalkylharnstoffe, siehe zum Beispiel EP-A 0 176 013, insbesondere (3-Dimethylaminopropylamin)-harnstoff) und Zinn-Katalysatoren (wie beispielsweise Dibutylzinnoxid, Dibutylzinndilaurat, Zinnoctoat).

Als Katalysatoren werden besonders bevorzugt Harnstoff, Derivate des Harnstoffs und/oder Amine und Aminoether, welche jeweils eine funktionelle Gruppe enthalten, die mit dem Isocyanat chemisch reagiert. Vorzugsweise ist die funktionelle Gruppe eine Hydroxyl-Gruppe, eine primäre oder sekundäre Aminogruppe. Diese besonders bevorzugten Katalysatoren haben den Vorteil, dass diese ein stark reduziertes Migrations- und Emissionsverhalten aufweisen.

Als Beispiele für besonders bevorzugte Katalysatoren seien genannt: (3-Dimethylaminopropylamin)-Harnstoff, 2-(2-Dimethylaminoethoxy)ethanol, N,N-Bis(3-dimethylaminopropyl)-N-isopropanolamin, N,N,N-Trimethyl-N-hydroxyethyl-bisaminoethylether und 3-Dimethylaminopropylamin.

Der Index (Kennzahl, Isocyanat-Index) gibt das prozentuale Verhältnis der tatsächlich eingesetzten Isocyanat-Menge zur stöchiometrischen, d.h. berechneten Isocyanat-Gruppen (NCO)-Menge an:

$$\text{Kennzahl} = [(\text{Isocyanat-Menge eingesetzt}) : (\text{Isocyanat-Menge berechnet})] \bullet 100 \qquad \text{(III)}$$

Darüber hinaus ist eine weitere bevorzugte Ausführungsform ein Polyurethanpolymer, insbesondere ein Polyurethan-Weichschaum, erhältlich nach einem oben genannte Verfahren. In einer anderen bevorzugten Ausführungsform der Erfindung ist das Polyurethanpolymer ein Polyurethanhartschaumstoff.

Eine weitere Ausführungsform betrifft die Verwendung eines nach dem erfindungsgenämßen Verfahren erhaltenen Polyurethanpolymers, insbesondere eines Polyurethan-Weichschaums, zur Herstellung von Möbelpolsterungen, Textileinlagen, Matratzen, Automobilsitzen, Kopfstützen, Armlehnen, Schwämmen und Bauelementen, oder Sitz- und Armaturenverkleidungen für Fahrzeuge. Die Anmeldung betrifft insbesondere die folgenden Ausführungsformen:

Nach einer ersten Ausführungsform betrifft die Erfindung ein NCO-terminiertes Prepolymer erhältlich durch oder erhalten durch Umsetzung einer Zusammensetzung enthaltend oder bestehend aus

5 bis 25 Gew.-Teilen einer Polyolkomponente, und

75 bis 95 Gew.-Teilen einer Polyisocyanatkomponente, jeweils bezogen auf die Zusammensetzung,

bei einem Index von 200 bis 25000,

dadurch gekennzeichnet, dass

die Polyolkomponente ein Polyetherthiocarbonat-Polyol enthält oder daraus besteht.

Nach einer zweiten Ausführungsform betrifft die Erfindung ein Prepolymer nach Ausführungsform 1, dadurch gekennzeichnet, dass die Polyolkomponente 50 bis 90 Gew.-Teile, bezogen auf die Polyolkomponente, des Polyetherthiocarbonat-Polyols enthält oder daraus besteht.

Nach einer dritten Ausführungsform betrifft die Erfindung ein Prepolymer nach Ausführungsform 1 oder 2, dadurch gekennzeichnet, dass die Zusammensetzung 10 bis 15 Gew.-Teile der Polyolkomponente und 85 bis 90 Gew.-Teile der Isocyanatkomponente enthält oder daraus besteht.

Nach einer vierten Ausführungsform betrifft die Erfindung ein Prepolymer nach einer der vorstehenden Ausführungsformen, dadurch gekennzeichnet, dass das Prepolymer einen NCO-Gehalt nach DIN EN ISO 11909:2007 von 3-45 Gew.-%, bevorzugt von 15-35 Gew.-%, besonders bevorzugt von 24-29 Gew.-% aufweist.

Nach einer fünften Ausführungsform betrifft die Erfindung ein Prepolymer nach einer der vorstehenden Ausführungsformen, dadurch gekennzeichnet, dass das Prepolymer eine Viskosität nach DIN 53019 von 0,10 bis 0,35 Pa*s, bevorzugt von 0,20 bis 0,28 Pa*s aufweist.

Nach einer sechsten Ausführungsform betrifft die Erfindung ein Prepolymer nach einer der vorstehenden Ausführungsformen, dadurch gekennzeichnet, dass das Polyetherthiocarbonat-Polyol erhältlich durch oder erhalten ist durch Umsetzung einer Mischung enthaltend oder bestehend aus einer H-funktionellen Starterverbindung, mindestens einem Alkylenoxid und $CS_2$, wobei der Anteil an $CS_2$ in dieser Mischung 5 bis 15 Gew.-%, bevorzugt 7 bis 12 Gew.-%, besonders bevorzugt 8 bis 10 Gew.-%, beträgt.

Nach einer siebten Ausführungsform betrifft die Erfindung ein Prepolymer nach einer der vorstehenden Ausführungsformen, dadurch gekennzeichnet, dass das Polyetherthiocarbonat-Polyol ein zahlengemitteltes Molekulargewicht nach Norm DIN 55672-1:2016-03 von 900 bis 15000 g/mol, bevorzugt von 500 bis 4000 g/molaufweist.

Nach einer achten Ausführungsform betrifft die Erfindung ein Prepolymer nach einer der vorstehenden Ausführungsformen, dadurch gekennzeichnet, dass das Polyetherthiocarbonat-Polyol eine OH-Zahl nach DIN 53240 vom 01.06.2013 von 25 bis 125 mg KOH/g, insbesondere von 40 bis 70 mg KOH/g, aufweist.

Nach einer neunten Ausführungsform betrifft die Erfindung ein Prepolymer nach einer der vorstehenden Ausführungsformen, dadurch gekennzeichnet, dass die Isocyanatkomponente einen Gehalt an difunktionellen Isocyanaten von 40 bis 100 Gew.-%, bevorzugt von 55 bis 75 Gew.-%, bezogen auf die Polyisocyanatkomponente, enthält.

Nach einer zehnten Ausführungsform betrifft die Erfindung die Verwendung eines NCO-terminierten Prepolymers nach einer der Ausführungsformen 1 bis 9 zur Herstellung eines Polyurethanpolymers, bevorzugt eines Polyurethan-Elastomers, besonders bevorzugt als Polyurethan-Weichschaum, und zur Herstellung von Klebstoffen, Dichtstoffen und -massen sowie Lacken und Beschichtungen.

Nach einer elften Ausführungsform betrifft die Erfindung ein Verfahren zur Herstellung eines Polyurethanpolymers, insbesondere eines Polyurethan-Weichschaums, durch Umsetzung einer Zusammensetzung enthaltend oder bestehend aus einer Komponente A enthaltend oder bestehend aus

- 65 bis 100 Gew.-Teile, bezogen auf Komponente A, gegenüber Isocyanaten reaktionsfähigen Wasserstoffatomen aufweisenden Verbindungen mit einem zahlengemittelten Molekulargewicht von 4000 - 15.000 g/mol als Komponente A1, insbesondere 80 bis 100 Gew.-Teile,
- optional 1 bis 20 Gew.-Teile, bezogen auf Komponente A, gegenüber Isocyanaten reaktionsfähigen Wasserstoffatomen aufweisenden Verbindungen mit einem zahlengemittelten Molekulargewicht von 400 - 3990 g/mol als Komponente A2, insbesondere 3 bis 12 Gew.-Teile,
- optional 0,5 bis 25 Gew.-Teile, bezogen auf Komponente A, Wasser und/oder physikalische Treibmittel als Komponente A3, insbesondere 2 bis 5 Gew.-Teile,
- optional 0,1 bis 10 Gew.-Teile, bezogen auf Komponente A, Vernetzer, Hilfs- und Zusatzstoffe als Komponente A4, insbesondere 0,2 bis 4 Gew.-Teile, wobei die eingesetzten Hilfsmittel bevorzugt gegenüber Isocyanaten reaktionsfähigen Wasserstoffatome aufweisen,

wobei sich die Gew.-Teile der Komponente A zu 100 addieren,
und
einer Komponente B enthaltend oder bestehend aus

- 50-100 Gew-Teile, bezogen auf Komponente B, eines Prepolymers nach einem der Ansprüche 1 bis 9 als Komponente B1, insbesondere 80 bis 100 Gew.-Teile,
- optional bis 50 Gew.-Teile, bezogen auf Komponente B, Di- oder Polyisocyanaten als Komponente B2, insbesondere 10 bis 50 Gew.-Teile,

wobei sich die Gew.-Teile der Komponente B zu 100 addieren,
und die Umsetzung bei einem Index von 70 bis 150, bevorzugt von 85 bis 110 durchgeführt wird.

Nach einer zwölften Ausführungsform betrifft die Erfindung ein Verfahren zur Herstellung eines Polyurethanpolymers, insbesondere eines Polyurethan-Weichschaums, durch Umsetzung einer Zusammensetzung enthaltend oder bestehend aus
einer Komponente A enthaltend oder bestehend aus

- 65 bis 100 Gew.-Teile, bezogen auf Komponente A, eines Polyetherthiocarbonat-Polyols als Komponente A1, insbesondere 80 bis 100 Gew.-Teile,
- optional 1 bis 20 Gew.-Teile, bezogen auf Komponente A, gegenüber Isocyanaten reaktionsfähigen Wasserstoffatomen aufweisenden Verbindungen mit einem zahlengemittelten Molekulargewicht von 400 - 3990 g/mol als Komponente A2, insbesondere 3 bis 15 Gew.-Teile,
- optional 0,5 bis 25 Gew.-Teile, bezogen auf Komponente A, Wasser und/oder physikalische Treibmittel als Komponente A3, insbesondere 2 bis 5 Gew.-Teile,
- optional bis 10 Gew.-Teile, bezogen auf Komponente A, Vernetzer, Hilfs- und Zusatzstoffe als Komponente A4, insbesondere 0,2 bis 4 Gew.-Teile, wobei die eingesetzten Hilfsmittel bevorzugt gegenüber Isocyanaten reaktionsfähigen Wasserstoffatome aufweisen

und wobei sich die Gew.-Teile der Komponente A zu 100 addieren, und Di- oder Polyisocyanate als Komponente B, wobei die Umsetzung bei einem Index von 70 bis 150, bevorzugt von 85 bis 110 durchgeführt wird.

Nach einer dreizehnten Ausführungsform betrifft die Erfindung ein Verfahren nach Ausführungsform 11 oder 12, dadurch gekennzeichnet, dass es sich um ein Formschaumverfahren handelt.

Nach einer vierzehnten Ausführungsform betrifft die Erfindung ein Polyurethanpolymer erhältlich nach einem Verfahren gemäß einer der Ausführungsformen 11, 12 oder 13, wobei das Polyurethanpolymer insbesondere ist ein Polyurethan-Weichschaum ist.

Nach einer fünfzehnten Ausführungsform betrifft die Erfindung die Verwendung eines Polyurethanpolymers nach Ausführungsform 14 zur Herstellung von Möbelpolsterungen, Textileinlagen, Matratzen, Automobilsitzen, Kopfstützen, Armlehnen, Schwämmen und Bauelementen, oder Sitz- und Armaturenverkleidungen für Fahrzeuge.

## Beispiele

Die vorliegende Erfindung wird anhand der nachfolgenden Beispiele weiter erläutert, ohne jedoch darauf beschränkt zu sein. Die angegebene OH-Zahl (auch: Hydroxylzahl) gibt im Falle eines einzelnen zugesetzten Polyols dessen OH-Zahl an. Angaben der OH-Zahl für Mischungen beziehen sich auf die zahlenmittlere OH-Zahl der Mischung, berechnet aus den OH-Zahlen der einzelnen Komponenten in ihren jeweiligen molaren Anteilen. Die OH-Zahl gibt die Menge an Kaliumhydroxid in Milligramm an, welche der bei einer Acetylierung von einem Gramm Substanz gebundenen Menge Essigsäure gleichwertig ist. Sie wird im Rahmen der vorliegenden Erfindung bestimmt nach der Norm DIN 53240 vom 1 Juni 2013.

Die Bestimmung des eingebauten Anteils an $CS_2$-Monomeren in den jeweiligen Polyolen erfolgte über die Messung des Schwefelanteils mittels Elementaranalyse in Anlehnung an die DIN CENTS 15289. Hierbei wird das zu analysierende Material in ein Keramikschiffchen eingewogen (0,018 g $\pm$ 0,01 g) und wird mit Quarzsand bedeckt. Anschließend wird die Probe im Sauerstoff-Strom bei 1350 °C vollständig verbrannt. Der im Polymer enthaltene Schwefelanteil wird dabei quantitativ zu gasförmigen $SO_2$ oxidiert. Der Gasstrom wird über Trocknungskolonnen in eine Infrarot-Zelle geleitet und die $SO_2$ Konzentration mittels Infrarotspektroskopie ermittelt (untere Konzentrationsgrenze 10 ppm, Messgenauigkeit 1 ppm). Die Bestimmung des Schwefelanteils erfolgte 3-fach.

Das zahlenmittlere Molekulargewicht ($M_n$) wurde mit Hilfe eines SECurity GPC-System von Agilent Technologies und PSS Polymer bestimmt. Das System Bestand aus isokratischer Pumpe, Auto-Sampler, Säulenofen und einem Refraktions Index- sowie einem Multi Wellenzahlen-Detektor. Die GPC-Säulen wurden von PSS Polymer Standard Service bezogen und bestanden aus 3 Säulen in Serie verknüft, eine Vorsäule PSS SDV linear S 5 $\mu$m (Länge 5 cm) und 2 Hauptsäulen PSS SDV linear S 5 $\mu$m (Länge 30 cm) die auf 30 °C temperiert wurden. Tetrahydrofuran (THF) wurde als Eluent mit einer Flussarte von 1 mL/min verwendet. Die Probe (6-8 mg) wurden in THF gelöst und mit einem Injektions-volumen von 20 $\mu$L eingespritzt. Die Messung der Probe sowie die Auswertung erfolgte mit der Software WinGPC UniChrom V8.10 Build 2830. Kalibiert wurde das System mit Polystyrol-Standards (474 - 141000 g/mol).

Die OH-Zahl wurde in Anlehnung an die DIN 53240-2 mit Hilfe eines Titrations-Systems der Firma Metrohm bestimmt. Anstellen von THF/DCM Gemischs wurde Methylpyrrolidone (NMP) als Lösungsmittel verwendet. Basierend auf der jeweiligen zu erwarteten OH-Zahl wurde die Probe in ein Vial eingewogen und Katalysatorlösung 0.01 g/mL 4-Dimethylaminopyridin in NMP; 30 mL) zugegeben und für 30 min gerührt. Anschließend wurde eine Lösung aus Essigsäureanhydrid und NMP (0.108 g/mL; 10 mL) zugebenen und die Mischung für weitere 30 min gerührt. Danach wurde die Reaktionslösung mit demineralisiertem Wasser verdünnt und mit KOH-Lösung (0.5 mol-% in Methanol) neutralisiert. Der Neutralpunkt wurde dabei potentiometrisch mit Hilfe einer Sonde (Tetraethylammoniumbromid in Ethylenglycol, 0.4 mol/L) bestimmt. Als Referenzsubstanz wurde Rizinusöl verwendet. Aus der gemessen OH-Zahl mit der Einheit mg/g bezogen auf mg[KOH]/g[Polyol] kann das absolute, durchschnittliche Molekulargewicht des Polyols mit Hilfe von Formel 1 berechnet werden.

$$MW = \frac{F * MW_{KOH}}{OH\#} \qquad (1)$$

MW = Molekurlargewicht Polyol OH# = OH-Zahl
MWKOH = Molekurlargewicht KOH F = Funktionalität des Polyols

A-1 Zellöffnend wirkendes Umsetzungsprodukt aus Sorbit mit Ethylenoxid und Propylenoxid und mit einem mittleren Molgewicht $M_n$ von 3,4 kg/mol. Die OH-Zahl beträgt 99 mg KOH/g.

A-2 Umsetzungsprodukt aus Glyzerin mit Propylenoxid und Ethylenoxid wobei das Ethylenoxid zwei Endblöcke bildet, die zusammen 13 Gew.-% des mittleren Molgewichts $M_n$ von 4,8 kg/mol bilden. Die OH-Zahl beträgt 35 mg KOH/g.

A-3 Umsetzungsprodukt einer Mischung aus Propylenglycol als Starter mit einem Gemisch aus $CS_2$ und Propylenoxid, wobei das Umsetzungsprodukt ein zahlengemitteltes Molekulargewicht $M_n$ von 2 kg/mol aufweist. Der Anteil

an $CS_2$ in dieser Mischung beträgt 9,5 Gew.-%(. 7,4 mol-% der Monomere). Das Polyol wird unter Verwendung eines Katalysators hergestellt, der Cobalt und Zink enthält. Die OH-Zahl beträgt 56 mg KOH/g, die Viskosität nach DIN 53019 beträgt 1 Pa*s (25°C) und das zahlengemittelte Molekulargewicht nach der oben beschreibenen Gelpermeationschromatographie-Methode entsprechend DIN 55672-1(März 2016) 3 kDa.

A-4 Umsetzungsprodukt aus Propylenglycol mit Propylenoxid mit einem mittleren Molekulargewicht $M_n$ von 2 kg/mol. Die OH-Zahl beträgt 56 mg KOH/g.

A-5 Umsetzungsprodukt einer Mischung aus Propylenglycol als Starter mit einem Gemisch aus Propylenoxid und $CO_2$ mit einem Molekulargewicht $M_n$ von 2 kg/mol. Der Anteil an $CO_2$ in dieser Mischung beträgt 20 Gew.-% (24,8% der Monomere). Die OH-Zahl beträgt 56 mg KOH/g. Di Viskosität bei 20°C beträgt 21 Pa*s.

B-1 Desmodur® 44V20L, phosgeniertes Anilin-Formaldehyd Polymer mit 31,2 Gew.-% NCO-Gruppen und einer Viskosität von 0,2 Pa*s bei 25°C (Covestro)

B-2 Desmodur® CD-S, ein Uretdionimin-haltiges Isocyanat mit 29,3 Gew.-% NCO-Gruppen hergestellt aus 4,4'-Methylendiphenyldiisocyanat und Methylphospholinoxid als Katalysator.

B-3 Mischung aus 2,4'-Methylendiphenyldiisocyanat und 4,4'-Methylendiphenyldiisocyanat 11:9

C-1 Wasser als chemisches Treibmittel

D-1 Polycat® 15 (CAS-Nummer 6711-48-4) als Katalysator (Evonik)

D-2 Jeffcat® ZF10 (CAS-Nummer 83016-70-0) als Katalysator mit einer hohen Selektivität für die Reaktion zwischen Isocyanat und Wasser (Huntsman)

E-1 Tegostab® B8734 LF2, Polyether-modifiziertes Oligosiloxan als Schaumstabilisator (Evonik)

E-2 Glyzerin als Vernetzer

E-3 Diethanolamin als Vernetzer

Als Basispolyol wird eine Mischung aus

4 Gew.-% von A-1,
90,4 Gew.-% von A-2,
3,1 Gew.-% von C-1,
0,45 Gew.-% von D-1,
0,1 Gew.-% von D-2,
1,03 Gew.-% von E1,
0,6 Gew.-% von E-2 und
0,3 Gew.-% von E-3 bezeichnet.
Schaumstoffe auf dieser Basis sind z. B. zur Herstellung von Autositzen geeignet.

**1. Herstellung von NCO-terminierten Prepolymeren P1, P2 und P3** :

**Tabelle 1**

| | | Vergleich | | Erfindungsgemäß | |
|---|---|---|---|---|---|
| NCO-termin. Prepolymer | | P1 | P2 | P3 | |
| Isocyanat | B-1 | 37,5 | 37,5 | 37,5 | Gew.-Teile |
| | B-2 | 50,0 | 50,0 | 50,0 | Gew.-Teile |
| | B-3 | 0,1 | 0,1 | 0,1 | Gew.-Teile |
| Thiocarbonat-haltiges Polyol | A-3 | - | - | 12,4 | Gew.-Teile |
| Polyether-Polyol | A-4 | 12,4 | - | - | Gew.-Teile |
| Polyethercarbonat-Polyol | A-5 | - | 12,4 | - | Gew.-Teile |

(fortgesetzt)

| | | Vergleich | | Erfindungsgemäß | |
|---|---|---|---|---|---|
| Isocyanatgehalt | | 636 | 636 | 636 | Mmol NCO/87,6 g (B1+B2+B3) |
| Hydroxylgehalt | | 12,4 | 12,4 | 12,4 | Mmol OH/12,4 g |
| NCO/OH | | 51,4 | 51,4 | 51,4 | mol/mol |
| Index = 100* NCO/OH | | 5140 | 5140 | 5140 | |
| Anteil difunktioneller Isocyanate in der Summe B1+B2+B3 | | 61 | 61 | 61 | Gew.-% |
| Urethangehalt im Prepolymer berechnet durch Monte-Carlo-Simulation | | 0,12 | 0,12 | 0,12 | Mol/kg |

Der Anteil difunktioneller Isocyanate in der Polyisocyanatkomponente wurde aus den Gehalten der jeweiligen Einzelkomponenten, die ein difunktionelles Isocyanat enthalten, im Verhältnis zu den anderen Komponenten berechnet.

Die Isocyanate B-1 und B-2 werden leicht mit Chlorwasserstoff in B-3 angesäuert und unter Rühren auf 80°C erwärmt. Die Polyolkomponenten A-3 bzw. A-4 bzw. A-5 werden über 30 Minuten isotherm zugetropft. Nach beendigter Zugabe wird die Mischung zwei Stunden bei 80°C gehalten, dann abgekühlt und in Aluminiumflaschen abgefüllt.

**Tabelle 2**

| | Vergleich | | Erfindungsgemäß | |
|---|---|---|---|---|
| NCO-termin. Prepolymer | P1 | P2 | P3 | |
| NCO-Gehalt DIN EN ISO 11909:2007 | 25,7 | 25,5 | 25,7 | Gew.-% |
| Viskosität (25°C) nach DIN 53019 | 0,22 | 0,40 | 0,25 | Pa*s |
| Gewichtsmittel der Molmassenverteilung berechnet durch Monte-Carlo-Simulation | 0,93 | 0,93 | 0,93 | Kg/mol |

Der NCO-Wert (auch: NCO-Gehalt, Isocyanatgehalt) wird bestimmt mittels EN ISO 11909:2007. Falls nicht anders angegeben, handelt es sich um die Werte bei 25°C. Die Viskositäten wurden mittels eines Rotationsviskosimeters Viscolab LC1 bestimmt.

Das erfindungsgemäße Prepolymer P3 weist vergleichbare Eigenschaften wie das Polyether-Polyolbasierte Prepolymer aus Vergleichsbeispiel P1 auf, insbesondere eine vergleichbare Viskosität. Im Gegensatz dazu ist die Viskosität des Polyetherpolycarbonat-Polyol-basierten Prepolymers aus Vergleichsbeispiel P2 fast doppelt so hoch wie die Viskosität des erfindungsgemäßen Prepolymers P3. Die Beispiele zeigen, dass das erfindungsgemäße Prepolymer P3 eine für die Herstellung von Polyurethanen, insbesondere von PUR-Weichschaumstoffen, vorteilhafte Viskosität im Bereich von 0,2 bis 0,3 Pa*s aufweist.

## 2. Herstellung und Charakterisierung von PUR-Weichschaumstoffen

Zur Herstellung von PUR-Weichschaumstoffen wurde die notwendige Menge der Polyolkomponente (Komponente A) in einem Pappbecher mit Blechboden (Volumen: ca. 850 ml) vorgelegt und mit einem Rührwerk (Fa. Pendraulik) mit Standardrührscheibe (d = 64 mm) bei 4200 U/min 45 Sekunden lang mit Luft beladen. Danach wurde die Isocyanatkomponente (Komponente B) der Komponente A zugesetzt und die Mischung mit einem Rührwerk für 5 Sekunden intensiv vermischt. Die genaue Zusammensetzung der einzelnen Komponenten sind in Tabellen 3a und 3b dargestellt. Zur Bestimmung der charakteristischen Reaktionszeiten wurde zu Beginn der Vermischung eine Stoppuhr gestartet. Anschließend wurden ca. 93 Gramm des Reaktionsgemisches in eine 23 °C warme, mit Teflonfolie ausgekleidete Kastenform aus Aluminium mit einem Volumen von 1,6 $dm^3$ gegossen. Die Form wurde für 6 Minuten verschlossen und verriegelt. Die mechanischen Untersuchungen und Brandschutztests wurden an dem Formschaum, die Reaktionskinetik an dem frei aufschäumenden Reaktionsgemisch im Becher bestimmt.

Die Startzeit $t_c$ ist erreicht, wenn ein Expandieren des Gemisches beobachtet wird (Beginn der Reaktion von Isocyanat und Wasser). Die Abbindezeit $t_G$ bestimmt den Zeitpunkt, an dem durch das Auftupfen eines Holzsiedestäbchens auf die Oberfläche des aufsteigenden PUR-Weichschaumstoffes Fäden gezogen werden. Nach der Abbindezeit ist das

Polymer bereits vernetzt. Die Steigzeit ts ist erreicht, wenn die Expansion des PUR-Weichschaumstoffes endgültig beendet ist. Hierbei ist zu beachten, dass einige Systeme dazu neigen, ein Stück abzusacken und dann noch einmal weiter steigen.

**Tabelle 3a: Zusammensetzung der Schaumstoffe bei Kennzahl 70**

| PUR | Vergleich-1 | Vergleich-2 | Erfindung-1 | |
|---|---|---|---|---|
| Basispolyol | 100 | 100 | 100 | Gew.-Teile |
| P1 | 51,5 | - | - | Gew.-Teile |
| P2 | - | 51,5 | - | Gew.-Teile |
| P3 | - | - | 51,3 | Gew.-Teile |

Die Angaben für die Gewichtsteile sind auf die Polyolkomponente bezogen.
Der Anteil an $CO_2$ in der Zusammensetzung zur Herstellung des PUR-Schaums im Vergleichsbeispiel 2 beträgt 8,4 g/kg Schaumstoff.
Der Anteil an $CS_2$ in der Zusammensetzung zur Herstellung des PUR-Schaums im erfindungsgemäßen Beispiel beträgt 3,8 g/kg Schaumstoff.

Der Anteil an $CS_2$, bzw. $CO_2$, in der Zusammensetzung zur Herstellung des PUR-Schaums wurde jeweils aus dem Verhältnis der Einsatzstoffe (Basispolyol, Prepolymer und Mischungsverhältnis bei Herstellung des Schaumstoffes) ermittelt.

**Tabelle 3b: Zusammensetzung der Schaumstoffe bei Kennzahl 90**

| PUR | Vergleich-1 | Vergleich-2 | Erfindung-1 | |
|---|---|---|---|---|
| Basispolyol | 100 | 100 | 100 | Gew.-Teile |
| P1 | 66,2 | | | Gew.-Teile |
| P2 | | 66,2 | | Gew.-Teile |
| P3 | | | 66,0 | Gew.-Teile |

Die Angaben für die Gewichtsteile sind auf die Polyolkomponente bezogen.
Der theoretische Anteil an Struktureinheiten die auf $CO_2$ basieren im Vergleichsbeispiel 2 beträgt 9,9 g/kg Schaumstoff.
Der theoretische Anteil an Struktureinheiten die auf $CS_2$ basieren im erfindungsgemäßen Beispiel beträgt 4,5 g/kg Schaumstoff.
Der theoretische Anteil an Struktureinheiten des Schaumstoffs die auf $CS_2$, bzw. $CO_2$, basieren wurden aus dem Verhältnis der Einsatzstoffe (Basispolyol, Prepolymer und Mischungsverhältnis bei Herstellung des Schaumstoffes) ermittelt.

**Tabelle 4a: Kinetik bei Kennzahl 70**

| | Vergleich-1 | Vergleich-2 | Erfindung-1 | |
|---|---|---|---|---|
| Startzeit | 14 | 15 | 14 | Sekunden |
| Abbindezeit = Fadenziehzeit | 113 | 112 | 112 | Sekunden |
| Steigzeit | 150 | 155 | 147 | Sekunden |
| Entformzeit | 300 | 300 | 300 | Sekunden |
| Ausreaktion | sehr gut | sehr gut | sehr gut | |
| Stabilität | gut | gut | gut | |
| Austriebsstörung | leicht | nein | nein | |

**Tabelle 4b: Kinetik bei Kennzahl 90**

| | Vergleich-1 | Vergleich-2 | Erfindung-1 | |
|---|---|---|---|---|
| Startzeit | 15 | 15 | 14 | Sekunden |
| Abbindezeit = Fadenziehzeit | 124 | 120 | 105 | Sekunden |
| Steigzeit | 147 | 148 | 145 | Sekunden |
| Entformzeit | 300 | 300 | 300 | Sekunden |
| Ausreaktion | sehr gut | sehr gut | sehr gut | |
| Stabilität | gut | gut | gut | |
| Austriebsstörung | leicht | nein | nein | |

Ausreaktion beschreibt, inwieweit der Schaumstoff beim Entformen nach 5 Minuten noch klebrig ist und wie er sich beim Aufdrücken verhält. Das System deutscher Schulnoten wird dabei herangezogen, so dass ein mit "sehr gut" bewerteter Schaumstoff 5 Minuten nach dem Entformen nicht mehr klebrig ist.
Stabilität beschreibt, inwieweit der Schaumstoff stellenweise kollabiert aussieht oder Einfallstellen aufweist. Das System deutscher Schulnoten wird dabei herangezogen, so dass ein mit "gut" bewerteter Schaumstoff nur auf weniger als 10 % der Oberfläche des Formteils kollabiert aussieht oder Einfallstellen aufweist.
Austriebsstörungen beschreiben Störungen der Zellstruktur in der Nähe der Entlüftungslöcher der Form. Sie geben einen Hinweis auf Instabilität bei Druckdifferenzen in der Form.

Das erfindungsgemäße Beispiel weist bei Kennzahl 90 Vorteile bei der Reaktionsgeschwindigkeit auf, weil die Abbindezeit verkürzt war.

**Tabelle 5a: Charakterisierung der Schaumstoffe bei Kennzahl 70**

| | Vergleich-1 | Vergleich-2 | Erfindung-1 | |
|---|---|---|---|---|
| Gesamtrohdichte | 64 | 65 | 65 | $kg/m^3$ |
| Kernrohdichte | 60 | 60 | 60 | $kg/m^3$ |
| Zellstruktur optisch | fein-mittel | fein-mittel | fein-mittel | |
| Haut | sehr gut | sehr gut | sehr gut | |
| Druckfestigkeit | 4,7 | 4,8 | 4,9 | kPa |

**Tabelle 5b: Charakterisierung der Schaumstoffe bei Kennzahl 90**

| | Vergleich-1 | Vergleich-2 | Erfindung-1 | |
|---|---|---|---|---|
| Gesamtrohdichte | 65 | 65 | 64 | $kg/m^3$ |
| Kernrohdichte | 59 | 60 | 60 | $kg/m^3$ |
| Zellstruktur optisch | fein-mittel | fein-mittel | fein-mittel | |
| Haut | sehr gut | sehr gut | sehr gut | |
| Druckfestigkeit | 10,6 | 11,8 | 10,9 | kPa |

Die Messung der Rohdichte erfolgte jeweils nach der DIN EN ISO 845 (Oktober 2009).
Die Druckfestigkeit des PUR-Weichschaumstoffes wurde jeweils gemäß DIN EN ISO 3386-1 (September 2010) bei 40% Stauchung gemessen.

Wenn es keine Hautablöser beim Entformen gab, d.h. die Haut des PUR-Weichschaumstoffs beim Ablösen aus der Form sich nicht vom Kern des Schaumstoffs als Film ablöste, wurde die Haut als "sehr gut" bezeichnet.

Alle Schaumstoffe weisen vergleichbare mechanische Eigenschaften auf. Dies zeigt, dass die erfindungsgemäßen Thiocarbonat-haltigen Prepolymere als Ersatz für herkömmliche Prepolymere auf Basis von Polyester-Polyolen oder Polyethercarbonat-Polyolen für die Synthese von PUR-Weichschäumen eingesetzt werden können.

**3. Untersuchung des Brandverhaltens der PUR-Weichschäume**

Beim Test nach der ISO-Norm 5660-1 (März 2015) werden Probenkörper von 1 x 1 x 0,3 $dm^3$ 20 min lang durch einen Wärmestrahler mit einer Bestrahlungsstärke von 50 kW/m' bestrahlt. Die effektive Verbrennungswärme ist der Quotient aus der gesamten Verbrennungswärme und dem Massenverlust. MARHE bezeichnet den Maximalwert des geglätteten Verlaufs der Wärmefreisetzung.

**Tabelle 6a: Brandverhalten im Cone Calorimeter ISO 5660-1 bei Kennzahl 70**

| | Vergleich-1 | Vergleich-2 | Erfindung-1 | |
|---|---|---|---|---|
| Gesamte Verbrennungswärme | 44 | 45 | 44 | $MJ/m^2$ |
| Effektive Verbrennungswärme | 2,8 | 2,8 | 2,8 | $MJ/(m^2g)$ |
| Spitzenwert der Wärmeentwicklung | 578 | 589 | 496 | $kW/m^2$ |
| Mittlere Wärmefreisetzung | 73 | 76 | 74 | $kW/m^2$ |
| MARHE | 373 | 375 | 354 | $kW/m^2$ |

**Tabelle 6b: Brandverhalten im Cone Calorimeter ISO 5660-1 (50 $kW/m^2$) bei Kennzahl 90**

| | Vergleich-1 | Vergleich-2 | Erfindung-1 | |
|---|---|---|---|---|
| Gesamte Verbrennungswärme | 41 | 39 | 38 | $MJ/m^2$ |
| Effektive Verbrennungswärme | 24,3 | 23,2 | 23,3 | $MJ/(m^2g)$ |
| Durchschnittliche Massenverlustrate | 76 | 75 | 53 | mg/s |
| Spitzenwert der Wärmeentwicklung | 607 | 667 | 565 | $kW/m^2$ |
| Mittlere Wärmefreisetzung | 69 | 65 | 63 | $kW/m^2$ |
| MARHE | 361 | 388 | 348 | $kW/m^2$ |

Sowohl bei Kennzahl 70 als auch bei Kennzahl 90 weist der erfindungsgemäße Schaumstoff durch deutlich geringere Spitzenwerte der Wärmefreisetzung auf als die PUR-Weichschäume der Vergleichsbeispiele. Dadurch ist der Wert für die gesamte Wärmefreisetzung (MARHE) im Vergleich zu denjenigen der PUR-Weichschäumen der Vergleichsbeispiele erniedrigt. Die experimentellen Daten zeigen, dass die erfindungsgemäßen PUR-Weichschaumstoffe ein verbessertes Brandverhalten im Vergleich zu herkömmlichen PUR-Weichschaumstoffen aufweisen. Damit sind die erfindungsgemäßen PUR-Weichschaumstoffe besser als herkömmliche PUR-Weichschäume für die Verwendung in Kraftfahrzeugen, beispielsweise als Polsterungs- oder Dämmmaterial, geeignet.

**Patentansprüche**

1. NCO-terminiertes Prepolymer erhältlich durch oder erhalten durch Umsetzung einer Zusammensetzung enthaltend oder bestehend aus

   5 bis 25 Gew.-Teilen einer Polyolkomponente, und
   75 bis 95 Gew.-Teilen einer Polyisocyanatkomponente, jeweils bezogen auf die Zusammensetzung,
   bei einem Index von 200 bis 25000,
   **dadurch gekennzeichnet, dass**
   die Polyolkomponente ein Polyetherthiocarbonat-Polyol enthält oder daraus besteht.

2. Prepolymer nach Anspruch 1, **dadurch gekennzeichnet, dass** die Polyolkomponente 50 bis 90 Gew.-Teile, bezogen auf die Polyolkomponente, des Polyetherthiocarbonat-Polyols enthält oder daraus besteht.

3. Prepolymer nach Anspruch 1 oder 2, **dadurch gekennzeichnet, dass** die Zusammensetzung 10 bis 15 Gew.-Teile der Polyolkomponente und 85 bis 90 Gew.-Teile der Isocyanatkomponente enthält oder daraus besteht.

4. Prepolymer nach einem der vorstehenden Ansprüche, **dadurch gekennzeichnet, dass** das Prepolymer einen NCO-Gehalt nach DIN EN ISO 11909:2007 von 3-45 Gew.-%, bevorzugt von 15-35 Gew.-%, besonders bevorzugt von 24-29 Gew.-% aufweist.

5. Prepolymer nach einem der vorstehenden Ansprüche, **dadurch gekennzeichnet, dass** das Prepolymer eine Viskosität nach DIN 53019 von 0,10 bis 0,35 Pa*s, bevorzugt von 0,20 bis 0,28 Pa*s aufweist.

6. Prepolymer nach einem der vorstehenden Ansprüche, **dadurch gekennzeichnet, dass** das Polyetherthiocarbonat-Polyol erhältlich durch oder erhalten ist durch Umsetzung einer Mischung enthaltend oder bestehend aus einer H-funktionellen Starterverbindung, mindestens einem Alkylenoxid und $CS_2$, wobei der Anteil an $CS_2$ in dieser Mischung 5 bis 15 Gew.-%, bevorzugt 7 bis 12 Gew.-%, besonders bevorzugt 8 bis 10 Gew.-%, beträgt.

7. Prepolymer nach einem der vorstehenden Ansprüche, **dadurch gekennzeichnet, dass** das Polyetherthiocarbonat-Polyol ein zahlengemitteltes Molekulargewicht nach Norm DIN 55672-1:2016-03 von 900 bis 15000 g/mol, bevorzugt von 500 bis 4000 g/molaufweist.

8. Prepolymer nach einem der vorstehenden Ansprüche, **dadurch gekennzeichnet, dass** das Polyetherthiocarbonat-Polyol eine OH-Zahl nach DIN 53240 vom 01.06.2013 von 25 bis 125 mg KOH/g, insbesondere von 40 bis 70 mg KOH/g, aufweist.

9. Prepolymer nach einem der vorstehenden Ansprüche, **dadurch gekennzeichnet, dass** die Isocyanatkomponente einen Gehalt an difunktionellen Isocyanaten von 40 bis 100 Gew.-%, bevorzugt von 55 bis 75 Gew.-%, bezogen auf die Polyisocyanatkomponente, enthält.

10. Verwendung eines NCO-terminierten Prepolymers nach einem der Ansprüche 1 bis 9 zur Herstellung eines Polyurethanpolymers, bevorzugt eines Polyurethan-Elastomers, besonders bevorzugt als Polyurethan-Weichschaum, und zur Herstellung von Klebstoffen, Dichtstoffen und -massen sowie Lacken und Beschichtungen.

11. Verfahren zur Herstellung eines Polyurethanpolymers, insbesondere eines Polyurethan-Weichschaums, durch Umsetzung einer Zusammensetzung enthaltend oder bestehend aus einer Komponente A enthaltend oder bestehend aus

    - 65 bis 100 Gew.-Teile, bezogen auf Komponente A, gegenüber Isocyanaten reaktionsfähigen Wasserstoffatomen aufweisenden Verbindungen mit einem zahlengemittelten Molekulargewicht von 4000 - 15.000 g/mol als Komponente A1, insbesondere 80 bis 100 Gew.-Teile,
    - optional 1 bis 20 Gew.-Teile, bezogen auf Komponente A, gegenüber Isocyanaten reaktionsfähigen Wasserstoffatomen aufweisenden Verbindungen mit einem zahlengemittelten Molekulargewicht von 400 - 3990 g/mol als Komponente A2, insbesondere 3 bis 12 Gew.-Teile,
    - optional 0,5 bis 25 Gew.-Teile, bezogen auf Komponente A, Wasser und/oder physikalische Treibmittel als Komponente A3, insbesondere 2 bis 5 Gew.-Teile,
    - optional 0,1 bis 10 Gew.-Teile, bezogen auf Komponente A, Vernetzer, Hilfs- und Zusatzstoffe als Komponente A4, insbesondere 0,2 bis 4 Gew.-Teile, wobei die eingesetzten Hilfsmittel bevorzugt gegenüber Isocyanaten reaktionsfähigen Wasserstoffatome aufweisen,

    wobei sich die Gew.-Teile der Komponente A zu 100 addieren,
    und
    einer Komponente B enthaltend oder bestehend aus

    - 50-100 Gew-Teile, bezogen auf Komponente B, eines Prepolymers nach einem der Ansprüche 1 bis 9 als Komponente B1, insbesondere 80 bis 100 Gew.-Teile,
    - optional bis 50 Gew.-Teile, bezogen auf Komponente B, Di- oder Polyisocyanaten als Komponente B2, insbesondere 10 bis 50 Gew.-Teile,

    wobei sich die Gew.-Teile der Komponente B zu 100 addieren,
    und die Umsetzung bei einem Index von 70 bis 150, bevorzugt von 85 bis 110 durchgeführt wird.

12. Verfahren zur Herstellung eines Polyurethanpolymers, insbesondere eines Polyurethan-Weichschaums, durch Umsetzung einer Zusammensetzung enthaltend oder bestehend aus einer Komponente A enthaltend oder bestehend

aus

- 65 bis 100 Gew.-Teile, bezogen auf Komponente A, eines Polyetherthiocarbonat-Polyols als Komponente A1, insbesondere 80 bis 100 Gew.-Teile,
- optional 1 bis 20 Gew.-Teile, bezogen auf Komponente A, gegenüber Isocyanaten reaktionsfähigen Wasserstoffatomen aufweisenden Verbindungen mit einem zahlengemittelten Molekulargewicht von 400 - 3990 g/mol als Komponente A2, insbesondere 3 bis 15 Gew.-Teile,
- optional 0,5 bis 25 Gew.-Teile, bezogen auf Komponente A, Wasser und/oder physikalische Treibmittel als Komponente A3, insbesondere 2 bis 5 Gew.-Teile,
- optional bis 10 Gew.-Teile, bezogen auf Komponente A, Vernetzer, Hilfs- und Zusatzstoffe als Komponente A4, insbesondere 0,2 bis 4 Gew.-Teile, wobei die eingesetzten Hilfsmittel bevorzugt gegenüber Isocyanaten reaktionsfähigen Wasserstoffatome aufweisen und wobei sich die Gew.-Teile der Komponente A zu 100 addieren, und

Di- oder Polyisocyanate als Komponente B,
wobei die Umsetzung bei einem Index von 70 bis 150, bevorzugt von 85 bis 110 durchgeführt wird.

**13.** Verfahren einem der Ansprüche 11 oder 12, **dadurch gekennzeichnet, dass** es sich um ein Formschaumverfahren handelt.

**14.** Polyurethanpolymer erhältlich nach einem Verfahren gemäß einem der Ansprüche 11 oder 12 oder 13, wobei das Polyurethanpolymer insbesondere ein Polyurethan-Weichschaum ist.

**15.** Verwendung eines Polyurethanpolymers nach Anspruch 14 zur Herstellung von Möbelpolsterungen, Textileinlagen, Matratzen, Automobilsitzen, Kopfstützen, Armlehnen, Schwämmen und Bauelementen, oder Sitz- und Armaturenverkleidungen für Fahrzeuge.

Europäisches Patentamt
European Patent Office
Office européen des brevets

# EUROPÄISCHER RECHERCHENBERICHT

Nummer der Anmeldung
EP 18 17 8088

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| A,D | US 2016/257776 A1 (JACOBS GUNDOLF [DE] ET AL) 8. September 2016 (2016-09-08)<br>* Absätze [0001], [0150]; Ansprüche 16-27 *<br>* Absatz [0194] - Absatz [0201] *<br>* Absatz [0216] - Absatz [0217]; Tabelle 1 *<br>----- | 1-15 | INV.<br>C08G18/48<br>C08G18/66<br>C08G18/76<br>C08G18/79<br>C08G18/18<br>C08G18/30<br>C08G18/32<br>C08G18/44<br>C08J9/00<br>C08J9/08<br>C08G18/10<br><br>ADD.<br>C08G101/00 |
| A | US 2017/044341 A1 (KLESCZEWSKI BERT [DE] ET AL) 16. Februar 2017 (2017-02-16)<br>* Absätze [0001], [0112]; Ansprüche 16-30 *<br>* Absatz [0113] - Absatz [0130]; Beispiele 1, 2; Tabelle 1 *<br>----- | 1-15 | |

RECHERCHIERTE SACHGEBIETE (IPC)

C08G
C08J

Der vorliegende Recherchenbericht wurde für alle Patentansprüche erstellt

1

| Recherchenort | Abschlußdatum der Recherche | Prüfer |
|---|---|---|
| München | 11. Dezember 2018 | Paulus, Florian |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
........................................................................
& : Mitglied der gleichen Patentfamilie, übereinstimmendes Dokument

EPO FORM 1503 03.82 (P04C03)

## ANHANG ZUM EUROPÄISCHEN RECHERCHENBERICHT ÜBER DIE EUROPÄISCHE PATENTANMELDUNG NR.

EP 18 17 8088

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

11-12-2018

| Im Recherchenbericht angeführtes Patentdokument | Datum der Veröffentlichung | Mitglied(er) der Patentfamilie | Datum der Veröffentlichung |
|---|---|---|---|
| US 2016257776 A1 | 08-09-2016 | BR 112013024740 A2 | 27-12-2016 |
| | | CA 2831387 A1 | 04-10-2012 |
| | | CN 103764703 A | 30-04-2014 |
| | | EP 2691434 A1 | 05-02-2014 |
| | | ES 2653151 T3 | 06-02-2018 |
| | | RU 2013147684 A | 10-05-2015 |
| | | US 2014066535 A1 | 06-03-2014 |
| | | US 2016257776 A1 | 08-09-2016 |
| | | WO 2012130760 A1 | 04-10-2012 |
| | | ZA 201307254 B | 23-12-2014 |
| US 2017044341 A1 | 16-02-2017 | CA 2946217 A1 | 29-10-2015 |
| | | CN 106232670 A | 14-12-2016 |
| | | EP 3134449 A1 | 01-03-2017 |
| | | JP 2017513993 A | 01-06-2017 |
| | | US 2017044341 A1 | 16-02-2017 |
| | | WO 2015162125 A1 | 29-10-2015 |

EPO FORM P0461

Für nähere Einzelheiten zu diesem Anhang : siehe Amtsblatt des Europäischen Patentamts, Nr.12/82

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- US 2016257776 A
- EP 1359177 A
- US 7304172 B2
- US 20120165549 A1
- EP 0176013 A


### In der Beschreibung aufgeführte Nicht-Patentliteratur


- **INOUE et al.** Copolymerization of Carbon Dioxide and Epoxide with Organometallic Compounds. *Die Makromolekulare Chemie,* 1969, vol. 130, 210-220
- Polyurethane. **G.W. BECKER ; D. BRAUN.** Kunststoff Handbuch. Carl Hanser Verlag, 1993, vol. 3. A., 193 f
- **M. H. CHISHOLM et al.** *Macromolecules,* 2002, vol. 35, 6494
- **S. D. ALLEN.** *J. Am. Chem. Soc.,* 2002, vol. 124, 14284
- *Beispiel Chemical Communications,* 2011, vol. 47, 141-163
- **W. SIEFKEN.** *Justus Liebigs Annalen der Chemie,* vol. 562, 75-136
- **G. OERTEL.** Kunststoff-Handbuch. Carl-Hanser-Verlag, 1993, vol. VII, 104-127